# EUROPEAN PATENT APPLICATION

(11) **EP 4 067 519 A1**
(43) Date of publication of application: **05.10.2022**
(21) Application number: 21166670.6
(22) Date of filing: 01.04.2021
(51) Int. Cl.: C22C 9/06, C22C 38/00, B32B 15/01, C21D 1/26, B23K 20/02, B23K 20/227, C22C 38/40, B23K 101/06, B23K 103/04

(54) **TUBE FOR SUBSEA APPLICATION**

(71) Applicant: HIPtec AS, 0278 Oslo (NO)
(72) Inventor: Jarvis, David, 1394 Nesbru (NO)
(74) Representative: AWA Sweden AB

(57) **Abstract**

The present invention relates to a tube for transporting fluids in seawater. The tube has a tubular body formed of an alloy selected from duplex stainless steel, superduplex stainless steel, a ferritic steel, a martensitic steel or a nickel superalloy and a layer configured to protect the tube from hydrogen induced stress cracking arranged on an outer surface of the tubular body. The layer is formed of an alloy having a copper content of 50 - 95 wt% and a nickel content of 5 - 50 wt%. The tube has a metallurgical bond at an interface between the tubular body and the layer. The metallurgical bond is formed by a hot pressing process for a predetermined time at a predetermined pressure and a predetermined temperature. The present invention also relates to a method for manufacturing a tube. The present invention also relates to a subsea arrangement.

## Description

### Technical field

The present invention relates to a metal tube, such as a tube for transporting fluids in seawater, and to a method of manufacturing a metal tube, such as a tube for transporting fluids in seawater, and to a subsea arrangement for transporting fluids in seawater.

### Background

Tubes for transporting fluids in seawater have several important applications in the industry today, for example tubes for oil and gas pipelines.

Subsea metallic hardware, especially carbon steel flowlines, are often protected from seawater corrosion by cathodic protection (CP). While very effective at preventing carbon steel from rusting, CP can be damaging to certain other alloys like superduplex steels, ferritic steels and even some nickel superalloys. The problem is known as hydrogen-induced stress cracking (HISC) and it occurs when hydrogen is generated at the seawater-facing surface of the component and the atomic hydrogen diffuses into the ferritic phase causing embrittlement under stress. In turn, this leads to catastrophic brittle fracture of an alloy component that normally would possess high ductility. Numerous subsea failures have unpredictably occurred over the past decades, sometimes leading to oil spillages, environmental damage, as well as production shutdowns and expensive repair operations. Industrial solutions to HISC include paint and plastic, but these are not robust enough to fully minimize the risks of HISC failure, as described in the DNV Recommended Practice "Duplex stainless steel - design against hydrogen induced stress cracking" (DNV-RP-F112, 2019-09 Edition).

Therefore, there exists a need in the industry today for improved methods of manufacturing tubes for transporting fluids in seawater, improved tubes for transporting fluids in seawater and improved subsea arrangements for transporting fluids in seawater.

### Summary

An object of the present invention is to provide a tube for transporting fluids in seawater, which at least partly alleviates the above mentioned drawbacks. This and other objects, that will become apparent in the following, are accomplished by a tube for transporting fluids in seawater having
a tubular body formed of an alloy selected from duplex stainless steel, superduplex stainless steel, a ferritic steel, a martensitic steel or a nickel superalloy;
a layer configured to protect the tube from hydrogen induced stress cracking arranged on an outer surface of the tubular body, wherein the layer is formed of an alloy having a copper content of 50 - 95 wt% and a nickel content of 5 - 50 wt%; wherein
the tube comprises a metallurgical bond between the tubular body and the layer, wherein the metallurgical bond is formed by a hot pressing process for a predetermined time at a predetermined pressure and a predetermined temperature.

The inventive tube for transporting fluids in seawater has proven to be a highly promising tube for application subsea applications in which the tube is exposed to and in contact with seawater, and under cathodic protection to protect the outer surface of the tube from corrosion. The present invention provides a tube comprising a tubular body formed of a duplex stainless steel, superduplex stainless steel, a ferritic steel, a martensitic steel or a nickel superalloy metallurgically bonded to a layer having a copper content of 50 - 95 wt% and a nickel content of 5 - 50 wt%, the layer being configured to protect the tube from hydrogen induced stress cracking (HISC) by being arranged on an outer surface of the tubular body. The layer will provide excellent protection against HISC owing to the material properties of the alloy used in the layer. The tube will also exhibit excellent mechanical properties owing to the strength of the alloy used in the tubular body.

The inventor has shown that an alloy having a copper content of 50 - 95 wt% and a nickel content of 5 - 50 wt%, such as cupronickel, has a low solubility of hydrogen (e.g. about 2 ppm or less) and a low hydrogen diffusivity. For example, diffusion modelling have shown that Cupronickel 70/30 (an alloy with a copper content of about 70 wt% and a nickel content of about 30 wt% and possible minor inclusions of less than 5 wt% of Fe, Mn, Si and/or Al) has a diffusion coefficient of D=10⁻¹⁴ m²/s as compared to superduplex ferrite having a diffusion coefficient of D=10⁻⁷ m²/s. Consequently, such alloys are suitable for protecting for example a tube for transporting fluids in seawater against HISC. The inventors have surprisingly realised that a protective layer of a copper and nickel containing alloy as described herein can be arranged and metallurgically bonded to a tubular body comprising an alloy selected from duplex stainless steel, superduplex stainless steel, a ferritic steel, a martensitic steel or a nickel superalloy. The metallurgical bond provides a high adhesion between the tubular body and the layer. Thus, a tube which is highly resistant to HISC when used in a cathodically protected subsea arrangement can be obtained. The limited strength of copper-nickel alloys as described herein will be compensated by the mechanical strength of the tubular body.

The metallurgical bond at the interface between the tubular body and the protective layer stem/originate from a hot pressing process, such as a hot isostatic pressing process. The metallurgical bond between the tubular body and the layer provides a bond of high strength and a ductile interface. Consequently, the layer of the inventive tube is durably attached to the tubular body and provides high resistance to spalling and corrosion and thus assures that the tubular body remains protected against HISC in that the layer acts as a hydrogen barrier coating on the tubular body. Tensile strength tests of superduplex steel metallurgically bonded to cupronickel through a hot isostatic pressing process (HIPping) have shown a yield strength of 163 MPa, ultimate tensile strength 341 MPa and a ductility of 22 %. In said tensile strength tests necking and fractures have occurred in the cupronickel further highlighting the strong bond formed between the tubular body and the layer. Herein, the term "metallurgical bond" refers to a diffusion bond formed in the solid state in which the principal bonding mechanism is interdiffusion of atoms across the interface. This means the inventive tube comprises a tubular body and a layer metallurgically bonded at an interface, and in that the atoms originating from the tubular body can be found at the opposite side of the interface, and vice versa.

It should be noted that conventional welding or fusion welding of copper nickel alloys as described herein onto steel is in principle impossible, due to the inherent immiscibility of copper and iron.

The tubular body formed of an alloy selected from duplex stainless steel, superduplex stainless steel, a ferritic steel, a martensitic steel or a nickel superalloy provides the tube with good mechanical properties e.g. strength. Said alloys are further suitable for transporting fluids such as oil, gas or water, owing to their high strength and advantageous mechanical properties.

Herein, the term "tubular body" refers to a tube-like elongated hollow body e.g. a body having a side wall surrounding an interior volume defined by the side wall the interior volume is called a "bore". The tubular body may have a uniform inner radius of the bore in a direction along a longitudinal centre axis of the tubular body.

The tubular body may in some examples be bent. The tubular body may have a tapered outer shape. The bore may itself be also tapered.

The tubular body may have more than one bore, such as two bores, three bores or four bores.

A cross-section of the tubular body may have a circular shape, ellipsoid shape or a hexagonal shape.

Preferably, the tubular body is formed of a wrought metal. The term "wrought metal" is known to the person skilled in the art. A wrought metal is formed when a cast metal is plastically deformed in any manner. The plastic deformation alters the microstructure of metal and the wrought metal exhibits properties that are different from those it had in the as-cast state.

The term "formed of an alloy selected from duplex stainless steel, superduplex stainless steel, a ferritic steel, a martensitic steel or a nickel superalloy" refers to that the tube tubular body should comprise a majority portion (by weight) of said alloy, such as at least 60 %, such as at least 70 %, such as at least 80 %, such as at least 90 %, such as at least 95 %. The tubular body may in some examples consist of an alloy selected from duplex stainless steel, superduplex stainless steel, a ferritic steel, a martensitic steel or a nickel superalloy.

Stainless steels may be classified by their crystalline structure into four main types: austenitic, ferritic, martensitic, and duplex.

The term "duplex stainless steel" is known to the person skilled in the art. A duplex stainless steel comprises substantially equal amounts of austenite and ferrite microstructure. The duplex stainless steel may comprise at least 4.5 wt% Ni.

The term "superduplex stainless steel" is known to the person skilled in the art. The superduplex stainless steel may comprise at least 5.5 wt% Ni. The superduplex steel may have a Pitting Resistance Equivalent Number (PREN) of 40 to 45.

The term "ferritic steel" is known to the person skilled in the art. A ferritic steel comprises less than 0.1 wt% C.

The term "martensitic steel" is known to person skilled in the art. A martensitic steel may comprise 0-5 wt% Ni.

The term "nickel-super alloys" is known to the person skilled in the art. A nickel-superalloy may comprise at least 50 wt% Ni. A nickel-super alloy may further comprise Ni, C, Cr, Mo, W, Nb, Fe, Ti, Al, V, and/or Ta and/or compositions thereof.

Herein, the term "inner radius" refers to the distance between a centre of the tube and an inner wall of the tube.

Herein, the term "layer" refers to a material arranged on the outer surface of the tubular body. The layer should be arranged so that it protects the tubular body from contact with the environment e.g. seawater, preferably the layer is arranged so that it covers an outer lateral surface of the tubular body. The layer is preferably formed from a sheet or hollow cylinder arranged on the tubular body. The layer may preferably be formed from a wrought material.

The term "formed of an alloy having a copper content of 50 - 95 wt% and a nickel content of 5 - 50 wt%" refers to that the layer comprises a majority (by weight) of the alloy, such as at least 60 %, such as at least 70 %, such as at least 80 %, such as at least 90 %, such as at least 95 % of the alloy The tubular body may in some examples consist of the alloy having a copper content of 50 - 95 wt% and a nickel content of 5 - 50 wt%.

The alloy having a copper content of 50 - 95 wt% and a nickel content of 5 - 50 wt% may preferably be selected from the material class cupronickel. The alloy may further comprise minor additions, preferably of less than 5 wt% of alloying elements such as Fe, Mn, Si and/or Al.

The alloy forming the layer may have a copper content of 55 - 95 wt% and a nickel content of 5 - 45 wt%, such as a copper content of 60 - 95 wt% and a nickel content of 5 - 40 wt%. The alloy may have a nickel content of 5 - 15 wt%, and optionally less than 5 % of at least one of iron, manganese, silicon and aluminium, the balance being copper and naturally occurring impurities in an amount of less than 0.5 wt%. The alloy may have a nickel content of 25 - 35 wt%, and optionally less than 5 % of at least one of iron, manganese, silicon and aluminium, the balance being copper and naturally occurring impurities in an amount of less than 0.5 wt%.

Herein, the term "lateral surface" (or enveloping lateral surface) refers to the exterior area of a tube of a cylindrical shape or hexagonal shape excluding the top and base. The top and base of the tubular body are provided as openings, which are arranged to be connected to other components in a subsea arrangement. The openings are typically not arranged to be in contact with seawater and may therefore not need protection against HISC.

Herein, the term "hydrogen induced stress cracking (HISC)" refers to the phenomenon of embrittlement and crack formation of a metallic article occurring when subjected to sea water, stress and hydrogen, whilst having a cathodic protection.

Herein, the predetermined pressure, the predetermined time and the predetermined temperature used during the hot pressing process may be within the ranges of what is normally used within the hot pressing industry, e.g. within the hot isostatic pressing industry. For example, the predetermined time may be within the range of 1 h to 10 h. The predetermined pressure may be within the range of 20 MPa to 200 MPa. The predetermined temperature may be within the range of 500 °C to 1400 °C. The predetermined time, the predetermined pressure and the predetermined temperature may all vary due to a variety of parameters known to the skilled person. For example, they may vary due to the size or the shape of the metal based tube which is being manufactured. Further, they may vary due to the material choice, e.g. which metal is being used.

Herein, the term "tube for transporting fluids in seawater" refers to a hollow tube adapted to transport fluids inside it and wherein the exterior of the tube is adapted to be in direct contact with seawater. The tube may have a minimum wall thickness of at least 10 %, such as of at least 20 %, such as of at least 30 % or of at least 40 %, of the longest distance between the tube centre and the outer wall of the tube, measured at a tube opening. The tube centre is defined as the geometric centre of the tube at the cross-section at the opening of the tube, measured from the outer walls of the tube. The tube may have wall thickness of less than 10 % of the radius of the tube, such as less than 5 %.

In the case of a cylindrical tube, the longest distance between the tube centre and the outer wall tube is the outer radius of the tube.

In the case of a tapered tube, the thickness of the tube narrows gradually as measured from one point of the tube to a second point of the tube. In the case of a tapered tube wall thickness of the tube may be substantially constant

Herein, the term "fluids" refer to a gas or a liquid such as oil.

In some embodiments, the tubular body is formed of a nickel-containing alloy being selected from duplex stainless steel, superduplex stainless steel, a ferritic steel, a martensitic steel or a nickel superalloy.

In some embodiments, when the tubular body is formed of a nickel-containing alloy as defined herein, the tube for transporting fluids in seawater may comprise a tubular body nickel depletion zone, wherein the nickel content in the tubular body nickel depletion zone is lower than the nickel content in the tubular body outside of the tubular body nickel depletion zone. The tubular nickel depletion zone stem/originate from the hot pressing process. The body nickel depletion zone can be seen in an Energy Dispersive X-ray Spectroscopy (EDS) analysis on a cross section of the tube e.g. the interface of the tubular body and the layer and is acting as a fingerprint indicating that the metal tube has been manufactured using the hot pressing process. Further, the body nickel diffusion zone indicates that diffusion has occurred in the tubular body and thus indicates that the material is diffusion bonded.

Herein, the term "body nickel depletion zone" refers to a part of the tubular body located between the interface of the tubular body and the layer and an inner part of the tubular body having an initial nickel-content.

In some embodiments, the tube for transporting fluids in seawater may comprise a layer nickel depletion zone, wherein the nickel content in the layer nickel depletion zone is lower than the nickel content in the layer outside of the layer depletion zone. Analogously to the body nickel depletion zone, the layer nickel depletion zone stem/originate from the hot pressing process. The layer nickel depletion zone can be seen in an Energy Dispersive X-ray spectroscopy (EDS) analysis on a cross section of the tube e.g. the interface of the tubular body and the layer and is acting as a fingerprint indicating that the metal tube has been manufactured using the hot pressing process. Further, the layer nickel diffusion zone indicates that diffusion has occurred in the layer and thus indicates that the material is diffusion bonded.

Herein, the term "layer nickel depletion zone" refers to a part of the layer located between the interface of the tubular body and the layer and an outer part of the layer having an initial nickel-content.

In some embodiments, the tube for transporting fluids in seawater may comprise a nickel enrichment zone at the interface, and the nickel content of the nickel enrichment zone is higher than the nickel content in at least one of the tubular body outside of the enrichment zone and the layer outside of the enrichment zone. The nickel enrichment zone stems/originates from the hot pressing process. The nickel enrichment zone can be seen in an Energy Dispersive X-ray spectroscopy (EDS) analysis on a cross section of the tube e.g. the interface of the tubular body and the layer and is acting as a fingerprint indicating that the metal tube has been manufactured using the hot pressing process. Further, the nickel enrichment zone indicates that diffusion has occurred in the interface and thus indicates that the material is diffusion bonded.

Herein, the term "nickel enrichment zone" refers to the interface wherein the nickel-content is higher than nickel-content of the body nickel depletion zone and/or the layer nickel depletion zone.

In some embodiments, said nickel enrichment zone at the interface, extends on both sides of the interface in a direction along a longitudinal centre axis of the tube. The nickel enrichment zone shows that diffusion has occurred and that a metallurgical bond is present between the tubular body and the layer along a longitudinal centre axis of the tube and thus indicates a strong bond between the tubular body and the layer.

The nickel enrichment zone and the nickel depletion zones may each extend in a direction perpendicular to extension of the metallurgical bond.

Typically, each of the nickel enrichment zone and the nickel depletion zones has a length in the direction perpendicular to extension of the metallurgical bond in the range of 10 - 100 µm.

In some embodiments, the nickel content of the nickel-containing alloy is at least 3 weight-%, such as at least 5 weight-%, such as at least 10 weight-%. Said nickel content of the alloy provides mechanical properties such as formability and ductility.

In some embodiments, the layer has a thickness of 0.5 - 25 mm, such as 1 - 20 mm, such as 5 - 15 mm. A layer of said thickness assures sufficient properties such as resistance to scratches and physical impacts meaning that the layer is not penetrated and thereby ensures that the tubular body is not exposed to the environment e.g. sea water.

In some embodiments, the copper-nickel alloy of the layer has a face centred cubic (FCC) crystal structure. A copper-nickel alloy with an FCC structure provides low hydrogen solubility and a slow hydrogen diffusion and consequently a copper-nickel alloy with an FCC structure effectively protects the tubular body from HISC.

In some embodiments, the layer is obtained from a wrought sheet metal. The wrought metal sheet may have a thickness of 0.5 mm to 25 mm, such as 1 mm to 20 mm, such as 5 mm to 15 mm.

In some embodiments, the layer is obtained from a wrought metal tube. The wrought metal tube may have preferably have an inner circumference corresponding to the outer circumference of the tubular body. The wrought metal tube may have a wall thickness of 0.5 mm to 25 mm, such as 1 mm to 20 mm, such as 5 mm to 15 mm.

In some embodiments, the layer is arranged so that it covers the outer lateral surface of the tubular body. Arranging the layer so that is covers the outer lateral surface of the tubular body provides the tube with HISC protection on e.g. the part of the tube that is in contact with sea water during use.

In some embodiments, the tube comprises traces at the interface between the tubular body and the layer, wherein said traces are formed by crystallographic mismatch.

These traces stem/originate from the hot pressing process. The former interface between the tubular body and the layer may be traced as it appears as a straight line, along which line metal grains are arranged. The straight line typically extends along the full length of the previous interface between the later surfaces of the tubular body and the layer in contact with each other. The traces are formed by crystallographic mismatch between the metal grains in the tubular body and the layer at the interface at the metallurgical bond.

These traces can be seen in an etched sample of the final product, thereby acting as a fingerprint indicating that the metal tube has been manufactured according to the hot pressing process or hot isostatic pressing process.

Traces will be visible in any cross-section perpendicular to the lengthwise extension of the tube taken along the length of the tube, owing to the fact that the lateral surfaces of the tubular body and the layer are metallurgically bonded together.

In some embodiments, the layer is configured to prevent microbial growth and/or other biological growth on the tube. Microbial and biological (e.g. arthropods, gastropods and crustacea) growth on tubes which are in contact with seawater is a huge problem in all subsea industries today. A layer having a copper content of 50 - 95 wt% and a nickel content of 5 - 50 wt% as defined herein is advantageous in that it also prevents microbial and biological growth on the tube, due to the anti-microbial nature of copper. Thus, the present invention advantageously provides a tube with improved lifetime when subjected to cathodic protection in seawater, since it provides excellent HISC-resistance due to the low diffusivity of hydrogen in copper, and since it provides protection from microbial and biological corrosion.

Another object of the invention is to provide an improved method for manufacturing a tube for transporting fluids in seawater, which at least partly alleviates the above mentioned drawbacks. This and other objects, which will become apparent in the following, are accomplished by a method for manufacturing a tube for transporting fluids in seawater comprising the steps of:
- providing a tubular body comprising an alloy selected from duplex steel, superduplex stainless steel, a martensitic steel, a ferritic steel or a nickel superalloy;
- providing a sheet or tube formed of an alloy having a copper content of 50 - 95 wt% and a nickel content of 5 - 50 wt%;
- arranging said sheet such that it covers an outer surface of the tubular body to form a tube assembly;
- perimetrically sealing the tube assembly, forming a cavity between the tubular body and the sheet;
- removing gas from said cavity;
- subjecting a tube assembly to a hot isostatic pressing process for a predetermined time at a predetermined pressure and a predetermined temperature, thereby closing the cavity so that the tubular body and the sheet or hollow cylinder bond metallurgically to each other to form the tube for transporting fluids in seawater.

The present invention is further based on insight that a tube for transporting fluids in seawater can be manufactured using a hot processing process such as a hot isostatic pressing process e.g. by providing a tubular body comprising a nickel-containing alloy selected from duplex steel, superduplex stainless steel, a ferritic steel or a nickel superalloy, providing and arranging a sheet or hollow cylinder formed of an alloy having a copper content of 50 - 95 wt% and a nickel content of 5 - 50 wt%, such that it covers an outer surface of the tubular body to form a tube assembly, perimetrically sealing the tube assembly to form a cavity, removing gas from said cavity and subjecting the tube assembly to a hot pressing process for a predetermined time at a predetermined pressure and a predetermined temperature.

Hereby, a HISC resistant tube can be manufactured in an effective manner.

The present invention provides a manufacturing method that generates a metallurgical bond between the tubular body and the layer, which metallurgical bond has high bond strength.

In some embodiments, the method for manufacturing a tube for transporting fluids in seawater further comprises
- subjecting the tube for transporting fluids in seawater to a heat treatment chosen from solution annealing, quenching and tempering. Subjecting the tube for transporting fluids in seawater to heat treatment can be conducted to alter the physical and/or chemical properties of the tube such as increasing ductility, reducing hardness, increasing toughness, preventing undesired low-temperature processes.

In some embodiments, the provided copper-nickel alloy sheet or hollow cylinder serves as a hot isostatic pressing canister. Using the provided copper-nickel alloy sheet as a hot isostatic pressing canister inherently leads to less material been machined away than e.g. if a separate hot isostatic pressing canister is used. Thus, the amount of waste material from the process is reduced and the environmental impact of reworking waste material is reduced.

Herein, the term "canister" refers to a closable compartment having a continuous side wall enclosing a volume. The canister is preferably provided with a first access opening arranged perpendicular to a second access opening. The access openings can be closed by closing members, in a fluid-proof manner. Alternatively, the canister is provided with an integral closing member integral with the side wall, i.e. a bottom portion.

In some embodiments, the method for manufacturing a tube for transporting fluids in seawater further comprises
- removing material by machining from the tube for transporting fluids in seawater using lathing or milling. By removing material from the tube for transporting fluids in seawater the shape can be even further tailored after the hot isostatic pressing process. Advantageously, since the method involves no or less than 5 %, shape-change between the metal tube assembly and the metal tube, the method can be used to manufacture tubes capable of spinning symmetrically around its longitudinal axis on a lathe, thereby allowing for efficient material removal, if necessary.

In some embodiments, the predetermined time of the hot pressing is in the range of 1-10 hours, the predetermined pressure is in the range of 20-200 MPa, and/or the predetermined temperature is in the range of 500-1400 °C. Herein, the predetermined time and the predetermined temperature used during the hot pressing process may be within the ranges of what is normally used within the hot pressing industry, e.g. within the hot isostatic pressing industry. The predetermined time, the predetermined pressure and the predetermined temperature may all vary due to a variety of parameters known to the skilled person. For example, they may vary due to the size or the shape of the metal based tube which is being manufactured. Further, they may vary due to the material choice, e.g. which metal is being used.

In some embodiments, the provided sheet or hollow cylinder has a thickness of 0.5 - 25 mm.The hot pressing process may be a hot isostatic pressing process, also known as a HIPping process, which is particularly suitable for the manufacturing of the tube for transporting fluids in seawater. The HIPping process typically involves subjecting a component, in this case the tube assembly, to both an elevated temperature and an isostatic gas pressure in a high pressure containment vessel, using for example argon as pressurizing gas. By using HIPping for manufacturing the tube the porosity in the structure of the tubes can be further reduced and the density of the structure further increased. Thus, an advantage using HIPping is that the tube after the HIPping process step has a near-net shape, i.e. the shape of the manufactured tube after the HIPping process step is the same, or almost, or sufficiently the same as the desired shape of the final tube. Hence, posttreatment of the tube related to re-shaping can be omitted or at least reduced compared to prior art methods. Moreover, and according to at least one example embodiment of the invention, during the HIPping process, portions or parts of the assembled tube arrangement are subjected to some lateral shearing. The lateral shearing may act as a surface treatment and remove any residual oxidation layers, or dirt, and thereby ensure a good metallurgical bonding.

The hot pressing process may involve subjecting the tube assembly to a uniaxial pressure, e.g. by using a hot pressing equipment and the simultaneous application of heat and pressure. Thus, the layer and tubular body metallurgically bond to each other at a temperature high enough to induce sintering and creep processes. It should be noted that for e.g. HIPping, traditionally a can or canister, such as a HIPping can, or a HIPping canister, is filled with a metal powder, prior to subjecting the powder-filled can to the hot pressing. Thus, the powder is hot pressed for a predetermined time at a predetermined pressure and a predetermined temperature, and is thus consolidated to the metal based component. In the inventive method instead utilizes a tubular body and a sheet, the drawbacks of using e.g. powder as a starting material for the manufacturing method, such as e.g. low packing density and the resulting shape change of the final product, are overcome or at least reduced. Hence, the method according to the invention may be described as a metal powder-free hot pressing (or HIPping) manufacturing method for manufacturing a tube.

Another object of the invention is to provide a subsea arrangement for transporting fluids in seawater, which at least partly alleviates the above mentioned drawbacks. This and other objects, which will become apparent in the following, are accomplished by a subsea arrangement for transporting fluids in seawater comprising
- a tube as defined above;
- a cathodic protection means connected to the tube and arranged to subject the tube to a voltage for protecting an outer surface of the tube from corrosion.

Herein, the term "cathodic protection means" refer to means for controlling the corrosion of a metal surface by establishing an electrochemical cell wherein the metal surface (in this case the protective layer) is made the cathode connected to a more easily corroded anode comprising a sacrificial material and/or a DC electrical power source.

In some embodiments, the cathodic protection means is arranged to subject the tube to a voltage in the range of less than 0 mV to -1500 mV saturated calomel electrode (SCE).

Examples of tubes useful in subsea arrangements which the tube of the present invention can be includes inter alia: christmas tree components, flowlines, tubing hangers, bonnets, valve bodies, wing blocks, hydraulic blocks, casings, connectors, hubs, tie-in products, manifolds, pressure capsules, risers, collars, flanges, pup joints, wye pieces, tees, bushings, elbows, bulkheads, cyclones etc.

### Brief description of the drawings

The above objects, as well as additional objects, features, and advantages of the present invention, will be more fully appreciated by reference to the following illustrative and non-limiting detailed description of embodiments of the present invention, when taken in conjunction with the accompanying drawings, wherein:
Fig. 1a shows a schematic drawing of a tube of the prior art.
Fig. 1b shows a schematic drawing of the tube according to embodiments of the invention.
Fig. 2a shows a cross section of the tube according to embodiments of the invention.
Fig. 2b shows a schematic drawing of a crystallographic mismatch located at the interface between the tubular body and the layer according to embodiments of the invention.
Fig. 3 shows a schematic drawing of a nickel content of the tube according to embodiments of the invention as a function of distance from the interface of the tubular body and the layer.
Fig. 4a-c depicts micrographs of the metallurgical bond of the tube according to embodiments of the invention.
Fig. 5a-c depicts various tensile rods as investigated in the examples.
Fig. 6 shows a flow-sheet explaining the steps of a method in accordance with embodiments of the invention.
Fig. 7 schematically illustrates a sub-sea arrangement according to embodiments of the invention.

### Detailed description

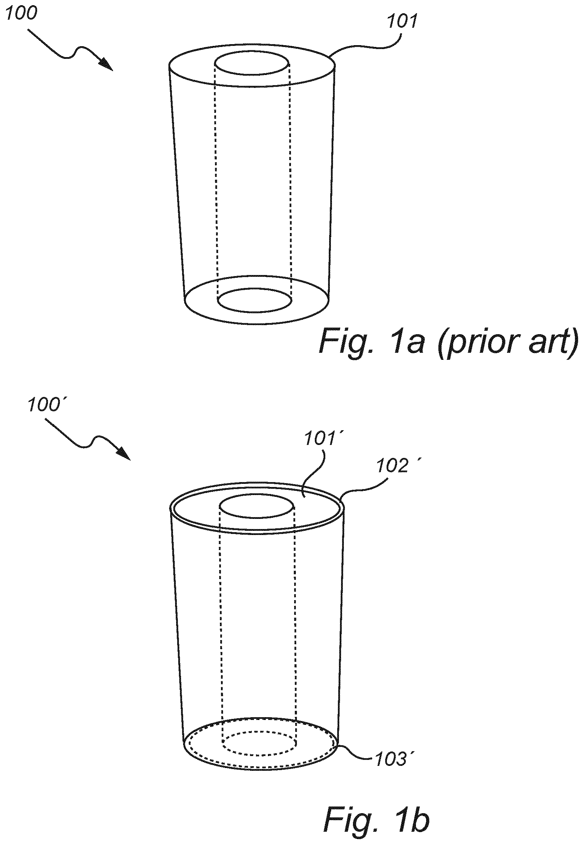

Fig. 1a depicts a prior art tube 100 formed a s single piece tubular body 101 formed by e.g. superduplex stainless steel. Such tubes are commonly used for transporting fluids in seawater. When subjected to corrosion protection means, such as cathodic protection means, the corrosion resistance of such tubes is good. However, the application of cathodic protection, which subjects the tube to a voltage, and the direct contact with seawater may cause another detrimental effect leading to catastrophic failure, namely hydrogen induced stress cracking (HISC). Furthermore, stainless steels are susceptible to growth of various microbes as water-living organism. Such growth can also lead to catastrophic failure of the tube.

The present inventor has found that the provision of a tube as shown in Fig. 1b has a vastly improved resistance to hydrogen induced stress cracking as compared to prior art tubes. Figure 1b depicts a tube 100' formed of a tubular body 101' and a layer 102'. The tubular body 101 is, in this example, depicted as a hollow cylinder of a nickel-containing alloy, e.g. superduplex stainless steel. The layer 102' is depicted as a hollow cylinder of an alloy having a copper content of 50 - 95 wt% and a nickel content of 5 - 50 wt%. Herein, the tubular body 101' and the layer 102' are depicted as having different thicknesses wherein the tubular body 101' has a greater thickness as compared to the outer layer 102'. An alloy having a copper content of 50 - 95 wt% and a nickel content of 5 - 50 wt% has been found to have a very low diffusivity of hydrogen as compared to the superduplex stainless steel. By preventing hydrogen from diffusing into the tube, the layer 102' protects the tube 100 from HISC. Furthermore, the copper in the layer 102' provides the layer with anti-microbial properties, which prevent growth from microbes and water-living organisms on the tube 100'.

The layer 102' has been metallurgically bonded to the tubular body 101' through a hot pressing process . Preferably, the hot pressing process is a hot isostatic pressing process. The predetermined time may be in the range of 1-10 hours, the predetermined pressure may be in the range of 20-200 MPa, and/or the predetermined temperature may be in the range of 500-1400 °C. Herein, the predetermined time and the predetermined temperature used during the hot pressing process may be within the ranges of what is normally used within the hot pressing industry, e.g. within the hot isostatic pressing industry. The predetermined time, the predetermined pressure and the predetermined temperature may all vary due to a variety of parameters known to the skilled person. For example, they may vary due to the size or the shape of the metal based tube which is being manufactured. Further, they may vary due to the material choice, e.g. which metal is being used.

The hot pressing process has formed a metallurgical bond in the tube 100' at the interface between the layer 102' and the tubular body 101'. The metallurgical bond 103' provides a bonding between the layer 102' and the tubular body 101 that is stronger that the alloy used for the layer 102'.

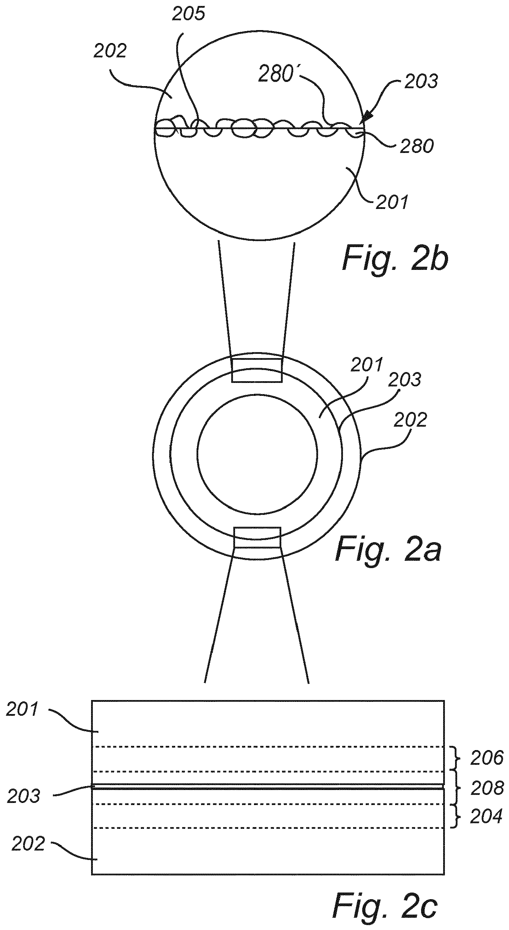

The metallurgical bond 103' formed by a hot pressing process may be referred to as a diffusion bond. Atoms from the layer 102' has diffused into the tubular body 101'. This can be studied using e.g. SEM-EDS. Fingerprints indicative of the metallurgical bond of the present invention is described in relation to Fig. 2a-c.

It should furthermore be noted that an alloy having a copper content of 50 - 95 wt% and a nickel content of 5 - 50 wt% cannot be welded to a steel tubular body, due to the immiscibility of copper and iron. By forming a metallurgical bond 103' using a hot pressing process, such as a hot isostatic pressing process, the inventor has formed a protective layer 102' on a tubular body 101' which can endure the high pressures exerted on the tube 100' when used for transporting fluids in seawater. The layer 102 should be arranged so that it substantially covers the whole outer surface of the tubular body 101' to protect the tube from hydrogen induced stress cracking.

It is readily understood that the tube to Figs. 1b is not limited to a cylindrical tubular body 101' and layer 102'. Other shapes, such as ellipsoid or hexagonal are equally suitable.

Fig. 2a depicts schematic drawing of a cross section of the tube shown in Fig. 1b. Fig. 2a depicts the tube 200 formed of tubular body 201 and layer 202, corresponding to the tubular body 101 and layer 102 in Fig. 1b. The tube comprises a metallurgical bond 203 at an interface between the layer 202 and the tubular body 201. The metallurgical bond extends around the full circumference of the interface, and joins every portion of the layer 202 to the tubular body 201. In Figs. 2b and c, various properties of the metallurgical bond 103 will be explained.

Fig. 2b depicts a schematic image of a crystallographic mismatch located at the interface between the tubular body 201 and the layer 202. The trace, e.g. a metallurgical detectable trace, of the interface 203 between the layer 202 and the tubular body 201, which trace is visible in tube after it is manufactured by the hot pressing process. In the schematic, a line 205, along which line a crystallographic mismatch of metal grains 280, 280' is clearly visible, which line and crystallographic mismatch forms the trace. Thus, the traces are formed by crystallographic mismatch at the interface between the tubular body 201 and the layer 202.

Herein, the crystallographic mismatch is indicative of a metallurgical bond having been formed by a hot pressing process for a predetermined time and a predetermined temperature and predetermined pressure. Expressed differently, the crystallographic mismatch is a fingerprint of the inventive tube. The crystallographic mismatch indicates that a metallurgical bond exists between the tubular body 201 and the layer 202.

Fig. 2c depicts a schematic illustration of the metallurgical bond between the tubular body 201 and the layer 202 of the tube according to embodiments of the invention.

In embodiments where the tubular body 201 comprises a nickel-containing alloy, yet another fingerprint can be found at interface, which is indicative of a metallurgical bound formed by the hot pressing process of the present invention.

The inventor has found that that the metallurgical bound 203 can be characterized by e.g. SEM-EDS and measurements of the nickel content in the tubular body 201 and the layer 202 near the metallurgical bond 203. The inventor has found that a nickel depletion zone 206 is formed in the tubular body near the metallurgical bond 203. This means that the nickel content is lower in the nickel depletion zone 206 than it is in the rest of the tubular body 201.

Similarly, a nickel depletion zone 204 can be found in the layer 202.

At the metallurgical bond, it has been found that a nickel enrichment zone 208 can be found extending on both sides of the bond 203. The amount of nickel in the nickel enrichment zone 208 is higher than the amount of nickel in at least one of the rest of the tubular body 201 and the rest of the layer 202. If the nickel content in the rest of the tubular body and the rest of the layer 202 is substantially the same, the nickel content of the nickel enrichment zone 208 will be higher than in both the rest of the tubular body 201 and the rest of the layer 202.

The nickel enrichment zone 208 and the nickel depletion zones 204, 206 each extends in a direction perpendicular to extension of the metallurgical bond 203. Typically, each of the zones 204, 206 and 208 has a length in the direction perpendicular to extension of the metallurgical bond 203 in the range of 10 - 100 µm.

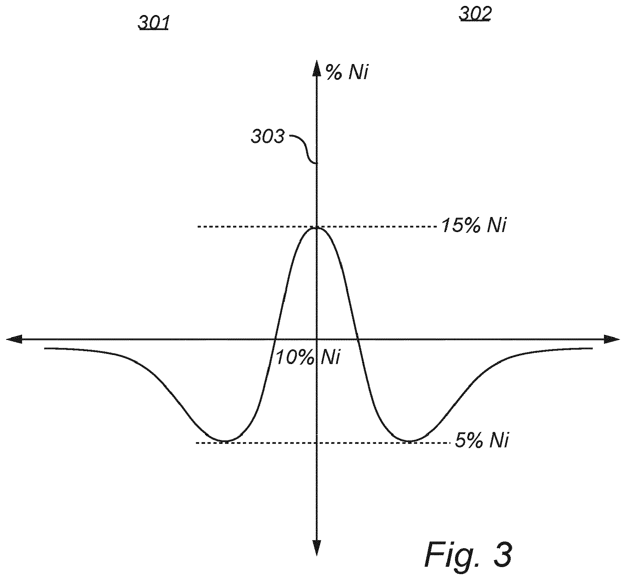

The nickel-enrichment and nickel depletion zones can be further explained with reference to Fig. 3. Fig. 3 shows a schematic plot of the nickel content in both the layer 302 and the tubular body 301 on each side of the metallurgical bond 303 (represented by the Y-axis) as a function of the distance from the interface. In this example, the tubular body 301 and the layer 302 has a nickel content of about 10 wt% The nickel content of the layer 302 is shown at the right of the Y-axis, and the nickel content in the body 301 at the left of the Y-axis. The x-axis intersects the Y-axis at a nickel content of 10 wt%, which in this example was the nickel content in the superduplex tubular body and the copper-nickel layer.

At a distance from the bond 303, the nickel content on both sides of the metallurgical bond is lower than in the rest of both the layer and the tubular body further away from the bond 303. These parts of the tubular layer and the layer are the respective depletion zones. The nickel content in the nickel depletion zones has a minimum of approximately 5 wt%. Even closer to the interface on both sides, a nickel-enrichment zone which extends from the tubular body to the layer and having a maximum nickel content of approximately 15 wt%.

It is contemplated that the nickel enrichment zone is formed by uphill diffusion of nickel from the nickel depletion zones during the hot pressing process as described herein. Therefore, the nickel enrichment and depletion zones are considered to be indicative of the metallurgical bond formed by the hot pressing process of the present invention, at least for embodiments in which the alloy of the tubular body contains nickel.

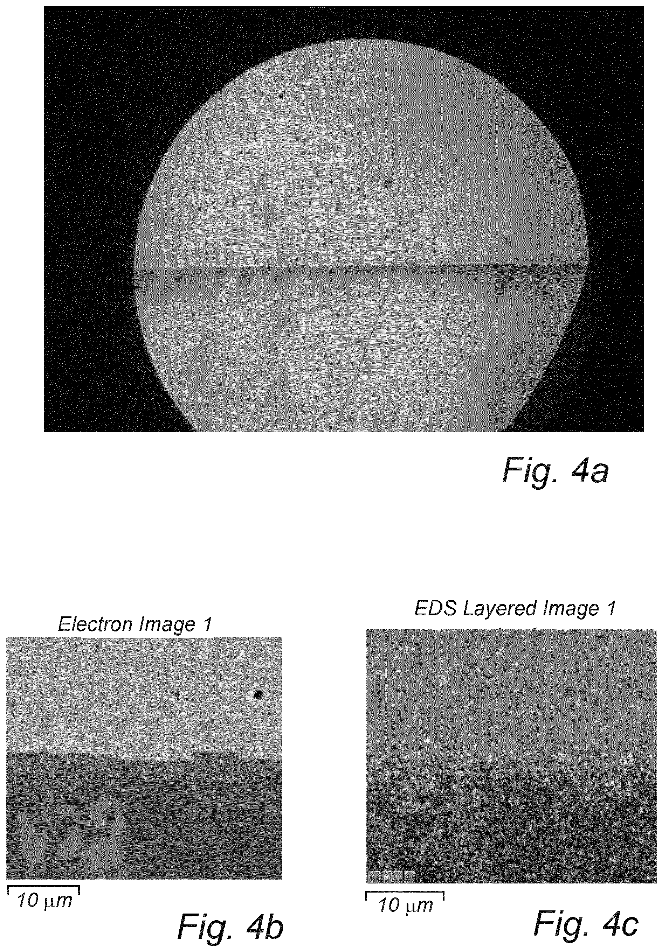

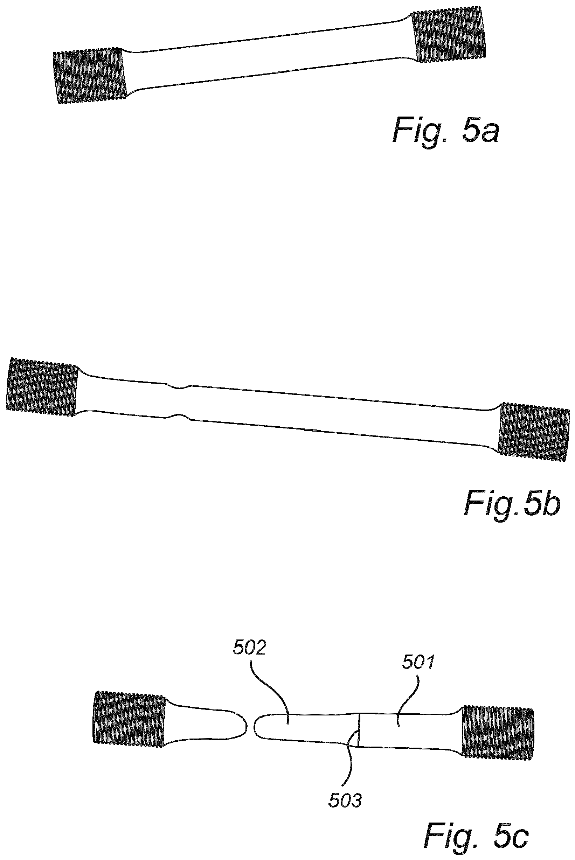

Figs. 4 and 5 are discussed under the heading "Examples" below.

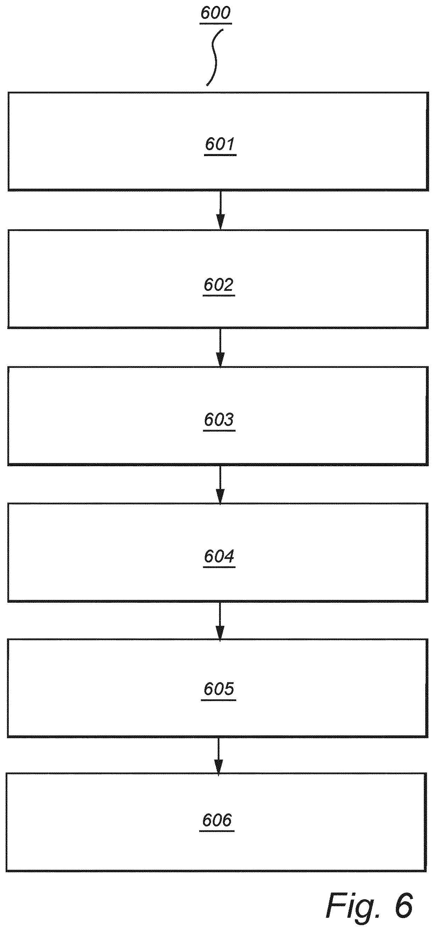

Fig. 6 shows a flow-sheet describing the different steps of a method for manufacturing a tube for transporting fluids in sea water. The method 600 comprises: providing 601 a tubular body comprising a nickel-containing alloy selected from superduplex stainless steel, duplex stainless steel, a martensitic steel, a ferritic steel or a nickel superalloy; providing 602 a sheet or tube formed of an alloy having a copper content of 50 - 95 wt% and a nickel content of 5 - 50 wt%; arranging 603 said sheet or tube such that it covers an outer surface of the tubular body to form a tube assembly; perimetrically sealing 604 the tube assembly, forming a cavity between the tubular body and the sheet; removing 605 gas from said cavity; subjecting 606 a tube assembly to a hot pressing process for a predetermined time at a predetermined pressure and a predetermined temperature, thereby closing the cavity so that the tubular body and the sheet bond metallurgically to each other to form the tube.

In providing 601 a tubular body, the tubular is a hollow object having an inner wall which surrounds an interior volume. The tubular body may preferably be a hollow cylinder. The tubular body should have at least one opening at the top of the tubular body and one opening at the bottom of the tubular body.

Alternatively, the tubular body is a hollow polyhedron, such as hollow cuboid having an access opening to the interior volume formed at least one side of the cuboid.

In providing 602 a sheet or a hollow cylinder, there is provided an element that can at least partly cover an outer surface of the tubular body. Preferably, the sheet or hollow cylinder can fully cover the outer surface of the tubular body.

The sheet or hollow cylinder may be readily available off-the-shelf.

In arranging 603 said sheet or hollow cylinder such that it covers an outer surface of the tubular body to form a tube assembly, the sheet or hollow cylinder is positioned to cover an outer surface of the tubular body. Preferably, the sheet or hollow cylinder is positioned to cover the outer surface of the tubular body.

In an example where a sheet is arranged so that it covers the outer surface of the tubular body, the sheet is wrapped around the outer surface of the tubular body so as to envelop the outer surface of the tubular body. The sheet is joined at the joining ends of the sheet by welding.

In an example where a hollow cylinder is arranged so that it covers the outer surface of the tubular body, the hollow cylinder is on the outer surface of the tubular body.

The lateral inner wall of the tubular body will enclose a volume which volume will correspond to the interior channel of the manufactured tube for transporting fluids in seawater.

In perimetrically sealing 604 the tube assembly, forming a cavity between the tubular body and the sheet or hollow cylinder perimetrically sealing the tube assembly, forming a cavity between the tubular body and the sheet. This may be performed by providing a first and second closing member and arranging said closing members such that they cover the openings of the tubular body. The closing members are then sealed to the sheet or hollow cylinder by means of e.g. welding, to form a closed canister around the tubular body.

In removing 605 gas from said cavity, contact between the of the tubular body and the sheet or hollow cylinder is improved. Gas may preferably be removed via a crimp tube in fluid communication with the intermediate space. A good contact between the tubular body and the sheet or hollow cylinder is advantageous in that it improves the metallurgical bond formed during the subsequent hot pressing process.

In subjecting 606 a tube assembly to a hot pressing process for a predetermined time at a predetermined pressure and a predetermined temperature, thereby closing the cavity so that the tubular body and the sheet bond metallurgically to each other to form the tube. Preferably, the hot pressing process is a hot isostatic pressing process. The predetermined time may be in the range of 1-10 hours, the predetermined pressure may be in the range of 20-200 MPa, and/or the predetermined temperature may be in the range of 500-1400 °C. Herein, the predetermined time and the predetermined temperature used during the hot pressing process may be within the ranges of what is normally used within the hot pressing industry, e.g. within the hot isostatic pressing industry. The predetermined time, the predetermined pressure and the predetermined temperature may all vary due to a variety of parameters known to the skilled person. For example, they may vary due to the size or the shape of the metal based tube which is being manufactured. Further, they may vary due to the material choice, e.g. which metal is being used.

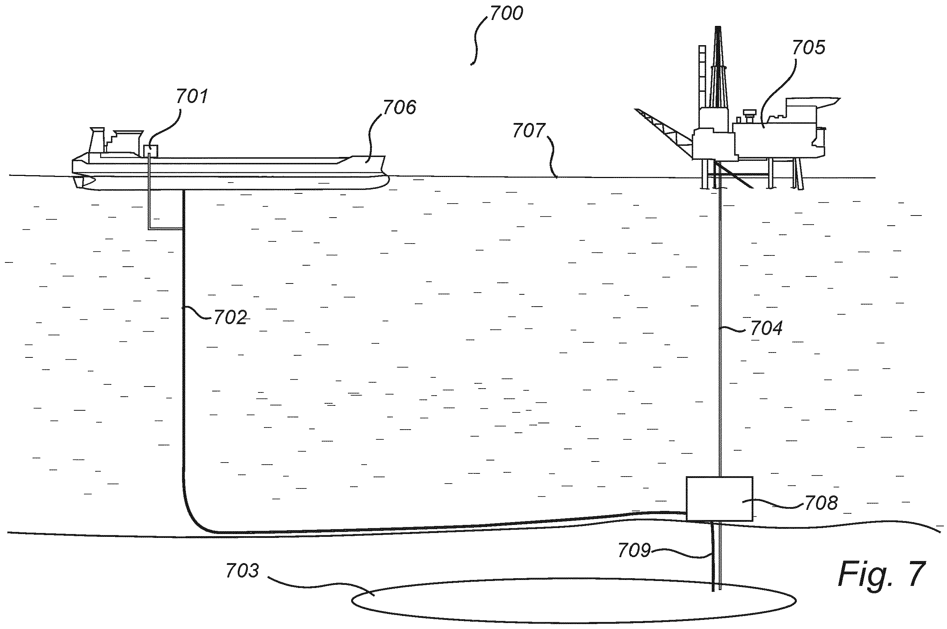

Figure 7 schematically shows a subsea arrangement 700 according to the present invention. The subsea arrangement comprises a tube 702 as defined in the present disclosure. The tube is arranged under a sea water surface 707 to transport a liquid, e.g. oil, from an oil deposit 703 to a container vessel 706. An oil drilling platform 705 and oil drill 704 are depicted for reference. A cathodic protection means 701 is provided, configured to subject the tube to a voltage for protecting an outer surface of the tube from corrosion. The layer of the tube 702 will protect the tube from hydrogen induced stress cracking (HISC) since the copper-nickel alloy of the layer is resistant to hydrogen diffusion. It will also protect the tube from microbial growth, due to the anti-microbial properties of copper.

The inventive tube may also or alternatively be arranged as a component in e.g. a Christmas tree, schematically depicted herein as component 708. It may furthermore or alternatively be arranged in the oil drill 704 and in the wellhead tube 709.

The cathodic protection means 701 is configured to subject the tube 702 to of approximately -1000 mV SCE. If the inventive tube is provided in any one of the components 704, 708 and/or 709, these will be subjected to cathodic protection as well.

Examples of components of a subsea arrangement in which the tube of the present invention can utilized be includes inter alia: christmas tree components, flowlines, tubing hangers, bonnets, valve bodies, wing blocks, hydraulic blocks, casings, connectors, hubs, tie-in products, manifolds, pressure capsules, risers, collars, flanges, pup joints, wye pieces, tees, bushings, elbows, bulkheads, cyclones etc.

The metallurgical bond at an interface between the tubular body and the layer in the tube 701, formed by a hot pressing process for a predetermined time at a predetermined pressure and a predetermined temperature provides an improved adherence of the layer to the tubular body. Consequently, the tube 701 exhibits mechanical properties that allows it to withstand the very demanding forces acting upon the tube 701 in a subsea arrangement 700.

Utilizing a tube 700 as defined can vastly improve the service life of a subsea arrangement. The risk for catastrophic failure is reduced, which provides environmental benefits as oil spills can be prevented.

### Examples

### Strength of metallurgical bond.

A test block of a superduplex steel provided with an outer layer of cupronickel (Cu₉₀Ni₁₀, containing around 90 wt% Cu, 10 wt% Ni and a total of about 2 wt% of Fe, Mn, Zn and/or Si) was produced using a hot isostatic pressing process (HIP), in which process the cupronickel was provided as cylindrical hipping canister provided on the outer surface of the cylindrical test block. The cylindrical hipping canister was made of a 3 mm sheet of cupronickel, bent, and welded to form a cylinder. A portion of the test block was cut out. An optical micrograph of the interface between the superduplex body and the cupronickel layer is shown in Fig. 4a, showing a well-bonded interface with cupronickel at the bottom of the image and superduplex at the top of the image.

The portion was studied also in a scanning electron microscope (SEM), and a micrograph is shown in Fig. 4b, showing a well-bonded interface also at the higher magnification provided by the SEM, with cupronickel at the top and superduplex at the bottom. The same interface was studied using energy dispersive spectroscopy (EDS) in the same SEM. An EDS-micrograph is shown in Fig. 4c showing a well-bonded interface, with cupronickel at the top and superduplex at the bottom. Diffusion bonding could be identified in the EDS since atoms from the layer had travelled into the superduplex test block. Nickel depletion zones and a nickel enrichment zones, as described above, could be observed by the EDS.

The as-Hipped test block of superduplex and cupronickel was mechanically tested and the average tensile properties of six specimens were as follows:
Yield strength = 163 MPa
Ultimate tensile strength = 341 MPa
Ductility = 22%

This shows that the steel/cupronickel interface is metallurgically bonded and the interface is ductile. All necking and fractures occurred on the cupronickel side of the interface, since cupronickel is the weaker of the two alloys.

A portion of the test block was subjected to bend testing. All bending occurred at the cupronickel side, showing a metallurgically well-bonded interface.

A tensile test rod, shown schematically in Fig. 5c, formed of a cupronickel Cu₉₀Ni₁₀ and a superduplex stainless steel was manufactured. The test rod had a metallurgical bond between the cupronickel 502 and the superduplex stainless steel 501 formed by a hot isostatic pressing process. The tensile test rod was subjected to tensile testing until break. As illustrated in Fig. 5c, the break and all of the necking occurred in the cupronickel 502, indicating a strong metallurgical bond 503.

### HISC testing

Tensile test rods 500, such as the one illustrated in Fig. 5a, of cupronickel were manufactured to test the cupronickel (Cu₉₀Ni₁₀) against hydrogen induced stress cracking. The tests rods were hydrogen charged for two weeks, and subjected to HISC conditions (constant stress, seawater and a cathodic protection voltage) for eight weeks. After, the test rods were examined and no embrittlement or fracture was found in any of the samples. Two samples were subjected to tensile testing above the yield strength. None of the samples exhibited any embrittlement or fracture. A schematic of a tensile test rod 500 above its yield point is shown in Fig. 5b.

The hydrogen solubility of Superduplex stainless steel (SDSS) and Cupronickel (Cu₉₀Ni₁₀) was studied and the results are displayed in Table 1. Sample 1, in both cases, were not hydrogen-charged and represent virgin reference material. Sample 2 and 3, in both cases, were hydrogen-charged for 2 weeks at different temperatures.
Cupronickel is proven to be 1-2 orders of magnitude lower in H solubility than superduplex.

**Table.1. HISC testing**

| Material | Sample | Temperature [°C] | Hydrogen [ppm] |
|---|---|---|---|
| SSDS | 1 | Room temperature | 2.2 |
| | 2 | 25 | 21 |
| | 3 | 80 | 170 |
| Cu₉₀Ni₁₀ | 1 | Room temperature | <0.2 |
| | 2 | 25 | 2.4 |
| | 3 | 80 | 2.3 |

Diffusion modelling by error function has been carried out for both cupronickel and superduplex alloy material. The diffusion coefficients are as follows:

| | |
|---|---|
| Superduplex ferrite | D=10⁻⁷ m2/s |
| Cu₇₀Ni₃₀ | D=10⁻¹⁴ m2/s |
| Cu₉₀Ni₁₀ | D=10⁻¹³ m2/s |

This shows there can be a 10 million factor difference in the speed of diffusion between superduplex and cupronickel during in-service conditions.

The extremely sluggish diffusion of hydrogen in cupronickel, coupled with its inherently low solubility of about 2ppm or less, means that will cupronickel forms an effective hydrogen barrier coating on subsea components, thus protecting against HISC fracture.

### Welding test

As a reference, an attempt to weld cupronickel to superduplex stainless steel was performed. It was found impossible to weld the cupronickel to the superduplex stainless steel. The cupronickel melted and poured off the cupronickel, without any bond forming.

## Claims

1. A tube (100') for transporting fluids in seawater having
a tubular body (101', 201) formed of an alloy selected from duplex stainless steel, superduplex stainless steel, a ferritic steel, a martensitic steel or a nickel superalloy;
a layer (102', 202) configured to protect the tube from hydrogen induced stress cracking arranged on an outer surface of the tubular body, wherein the layer is formed of an alloy having a copper content of 50 - 95 wt% and a nickel content of 5 - 50 wt%; wherein
the tube comprises a metallurgical bond (103', 203) at an interface between the tubular body and the layer, wherein the metallurgical bond is formed by a hot pressing process for a predetermined time at a predetermined pressure and a predetermined temperature.

2. The tube for transporting fluids in seawater according to claim 1, wherein the alloy of the tubular body contains nickel, wherein the tubular body comprises a tubular body nickel depletion zone (206), wherein the nickel content in the tubular body nickel depletion zone is lower than the nickel content in the tubular body outside of the tubular body nickel depletion zone.

3. The tube for transporting fluids in seawater according to claim 1 or 2, wherein the alloy of the tubular body contains nickel, wherein the layer comprises a layer nickel depletion zone (204), wherein the nickel content in the layer nickel depletion zone is lower than the nickel content in the layer outside of the layer depletion zone.

4. The tube for transporting fluids in seawater according to any one of claims 1-3, wherein the alloy of the tubular body contains nickel, wherein the tube comprises a nickel enrichment zone (208) at the interface, and the nickel content of the nickel enrichment zone is higher than the nickel content in at least one of the tubular body outside of the enrichment zone and the layer outside of the enrichment zone.

5. The tube for transporting fluids in seawater according to claim 4, wherein said nickel enrichment zone at the interface, extends on both sides of the interface in a direction along a longitudinal centre axis of the tube.

6. The tube for transporting fluids in seawater according to any one of claims 1-5, wherein the alloy of the tubular body contains nickel, wherein the nickel content of the alloy is at least 3 weight-%.

7. The tube for transporting fluids in seawater according to any one of claims 1-6, wherein the layer has a thickness of 0.5 - 25 mm.

8. The tube for transporting fluids in seawater according to any one of claims 1-7, wherein the alloy of the layer has an FCC crystal structure.

9. The tube for transporting fluids in seawater according to any one of claims 1-8, wherein the layer is obtained from a wrought sheet or wrought metal hollow cylinder.

10. The tube for transporting fluids in seawater according to any one of claims 1-9, wherein the layer is arranged so that it covers the outer lateral surface of the tubular body.

11. The tube for transporting fluids in seawater according to any one of claims 1-10, wherein said tube comprises traces (205) at the interface between the tubular body and the layer, wherein said traces are formed by crystallographic mismatch (280, 280').

12. The tube for transporting fluids in seawater according to any one of claims 1-11, wherein the layer is configured to prevent microbial and/or other biological growth on the tube.

13. A method (600) for manufacturing a tube for transporting fluids in seawater comprising the steps of:
- providing (601) a tubular body comprising an alloy selected from superduplex stainless steel, duplex stainless steel, a martensitic steel, a ferritic steel or a nickel superalloy;
- providing (602) a sheet or hollow cylinder formed of an alloy having a copper content of 50 - 95 wt% and a nickel content of 5 - 50 wt%;
- arranging (603) said sheet or hollow cylinder such that it covers an outer surface of the tubular body to form a tube assembly;
- perimetrically sealing (604) the tube assembly, forming a cavity between the tubular body and the sheet or hollow cylinder;
- removing gas (605) from said cavity;
- subjecting (606) a tube assembly to a hot pressing process for a predetermined time at a predetermined pressure and a predetermined temperature, thereby closing the cavity so that the tubular body and the sheet or hollow cylinder bond metallurgically to each other to form the tube.

14. The method for manufacturing a tube for transporting fluids in seawater according to claim 13, further comprising:
- subjecting the tube for transporting fluids in seawater to a heat treatment chosen from solution annealing, quenching and tempering.

15. The method for manufacturing a tube for transporting fluids in seawater environment according to claim 13 or 14, wherein the provided sheet or hollow cylinder serves as a hot pressing canister.

16. The method for manufacturing a tube for transporting fluids in seawater according to any one of claims 13-15, further comprising:
- removing material by machining from the tube for transporting fluids in seawater using lathing or milling.

17. The method for manufacturing a tube for transporting fluids in seawater according to any one of claims 13-16, wherein hot pressing process is a hot isostatic pressing process and the predetermined time is in the range of 1-10 hours, the predetermined pressure is in the range of 20-200 MPa, and/or the predetermined temperature is in the range of 500-1400 °C.

18. The method for manufacturing a tube for transporting fluids in seawater according to any one of claims 13-17, wherein the provided sheet or hollow cylinder has a wall thickness of 0.5 - 25 mm.

19. A subsea arrangement /700) for transporting fluids in seawater comprising
- a tube (702, 704, 708, 709) as defined in anyone of claims 1-12;
- a cathodic protection means (701) connected to the tube and arranged to subject the tube to a voltage for protecting an outer surface of the tube from corrosion.

20. The subsea arrangement according to claim 19, wherein the cathodic protection means is arranged to subject the tube to a voltage in the range of less than 0 mV to -1500 mV SCE.
